# EUROPÄISCHE PATENTSCHRIFT

(11) **EP 1 426 625 B1**
(45) Veröffentlichungstag und Bekanntmachung des Hinweises auf die Patenterteilung: **30.11.2005**
(21) Anmeldenummer: 03024776.1
(22) Anmeldetag: 30.10.2003
(51) Int. Cl.: F15B 15/08

(54) **Kolbenstangenloser Linearantrieb**
Rodless linear actuator
Actionneur linéaire sans tige

(30) Priorität: 03.12.2002 DE 10258139
(43) Veröffentlichungstag der Anmeldung: 09.06.2004
(73) Patentinhaber: FESTO AG & Co, 73734 Esslingen (DE)
(72) Erfinder: Doleschel, Bernd, 73240 Wendlingen (DE); Krafft, Gerhard, 73760 Ostfildern-Ruit (DE); Wagner, Thomas, 71686 Remseck (DE)
(74) Vertreter: Abel, Martin

(56) Entgegenhaltungen:
- EP-A- 0 722 046
- EP-A- 1 182 359
- DE-C- 942 179
- US-A- 5 469 775

## Beschreibung

Die Erfindung betrifft einen kolbenstangenlosen Linearantrieb, mit einem längliche Gehäuse, das einen Aufnahmeraum für ein in der Gehäuse-Längsrichtung bewegliches Antriebsteil aufweist, das über einen einen Längsschlitz, des Gehäuses durchsetzenden Mitnehmer mit einem Führungsschlitten bewegungsgekoppelt ist, der an einer gehäusefesten Linearführung in der Gehäuse-Längsrichtung verstellbar geführt ist.

Bei einem aus der EP 1182359 A1 bekannten Linearantrieb dieser Art greift der Mitnehmer mit seinem äußeren Endabschnitt in eine vom Führungsschlitten abgewandte Ausnehmung ein und ist mit dem Führungsschlitten fest verschraubt. Die daraus resultierende starre Verbindung kann, in Verbindung mit den durch die Schrauben fest vorgegebenen Befestigungspunkten, während des Betriebes zu Verspannungen im System führen, wenn toleranzbedingt keine exakte Parallelität zwischen dem Laufweg des Antriebsteils und dem Laufweg des Führungsschlittens vorliegt. Darüber hinaus schlägt sich die gewählte Befestigungsart negativ auf die Herstellungs- und Montagekosten nieder.

Es ist die Aufgabe der vorliegenden Erfindung, einen kolbenstangenlosen Linearantrieb mit optimierter Bewegungskopplung zwischen dem Mitnehmer und dem Führungsschlitten zu schaffen.

Zur Lösung dieser Aufgabe ist bei einem kolbenstangenlosen Linearantrieb der eingangs genannten Art vorgesehen, dass der Mitnehmer mit einem von seinem äußeren Endabschnitt gebildeten Kopplungsabschnitt zwischen den Führungsschlitten und ein an diesem befestigtes Kraftübertragungsteil eingreift, wobei er ohne direkte führungsschlittenseitige Befestigung im Rahmen einer Steckverbindung in der Gehäuse-Längsrichtung formschlüssig mit einer an der dem Führungsschlitten zugewandten Innenseite des Kraftübertragungsteils ausgebildeten Kopplungsaufnahme in Eingriff steht.

Auf diese Weise erfolgt die Bewegungskopplung zwischen dem Mitnehmer und dem Führungsschlitten nicht direkt, sondern unter Zwischenschaltung eines gesonderten Kraftübertragungsteils, das zum einen am Führungsschlitten befestigt ist und zum anderen im Rahmen einer Steckverbindung derart mit dem Kopplungsabschnitt in Eingriff steht, dass zwischen ihm und dem Kopplungsabschnitt in der Gehäuse-Längsrichtung eine formschlüssige und mithin spielfreie Verbindung vorliegt. Da sich die Kopplungsaufnahme an der dem Führungsschlitten zugewandten Innenseite des Kraftübertragungsteils befindet, besteht die Möglichkeit, die gewünschte formschlüssige Steckverbindung in einem Arbeitsgang bei der schlittenseitigen Montage des Kraftübertragungsteils herzustellen. Man kann beispielsweise vorsehen, den Führungsschlitten einerseits und die aus dem Antriebsteil und dem Mitnehmer bestehende Antriebseinheit andererseits unabhängig voneinander am Linearantrieb zu installieren und erst anschließend, nach entsprechender Ausrichtung, durch Ansetzen des Kraftübertragungsteils die gewünschte Bewegungskopplung herzustellen. Dabei bietet die Steckverbindung den Vorteil, dass die im montierten Zustand vorliegende Relativposition zwischen dem Mitnehmer und dem Kraftübertragungsteil variabel ist und mithin beim Zusammenbau keine Verspannungen quer zur Gehäuse-Längsrichtung hervorgerufen werden.

Vorteilhafte Weiterbildungen der Erfindung gehen aus den Unteransprüchen hervor.

Der Kopplungsabschnitt kann derart formschlüssig an der Kopplungsaufnahme fixiert sein, dass bei gewisser Krafteinwirkung eine relative Beweglichkeit zwischen diesen Komponenten in einer zur Gehäuse-Längsrichtung rechtwinkeligen Querebene gegeben ist. Dadurch kann die Möglichkeit eröffnet werden, während der Linearbewegung eine Relativbewegung zwischen dem Mitnehmer und dem Kraftübertragungsteil in der erwähnten Querebene zuzulassen, sodass sich diese Komponenten bei Abweichungen in der Parallelität der Laufstrecken von Antriebsteil und Führungsschlitten selbsttätig zueinander ausrichten können.

Die Kopplungsaufnahme ist zweckmäßigerweise mit zwei in der Gehäuse-Längsrichtung orientierten, einander zugewandten seitlichen Begrenzungsflächen konzipiert, zwischen die der Mitnehmer mit seinem Kopplungsabschnitt formschlüssig eintaucht. Die Kopplungsaufnahme kann insbesondere von einer an der Innenseite des Kraftübertragungsteils vorgesehenen Vertiefung gebildet sein. Dabei können die seitlichen Begrenzungsflächen der Vertiefung an rippenartigen Vorsprüngen des Kraftübertragungsteils ausgebildet sein.

Das erfindungsgemäße Konzept ermöglicht es, das Kraftübertragungsteil sehr kostengünstig als einstückiges Kunststoff-Formteil auszubilden. Vor allem bei einer solchen Kunststoffvariante ist es von Vorteil, wenn das Kraftübertragungsteil gehäuseartig gestaltet und an seiner dem Führungsschlitten zugewandten Innenseite wandlos ausgeführt ist, sodass die Kopplungsaufnahme frei zugänglich ist.

Das Kraftübertragungsteil ist bevorzugt seitlich am Führungsschlitten angeordnet, sodass die Oberseite des Führungsschlittens zum Anbringen zu verlagernder Bauteile frei bleibt.

Es ist ferner vorteilhaft, wenn das Kraftübertragungsteil zusätzlich zu der Kraftübertragungsfunktion gleichzeitig auch die Funktion einer Abdeckung für den außerhalb des Längsschlitzes liegenden Abschnitt des Mitnehmers sowie den jeweils auf gleicher axialer Höhe mit dem Führungsschlitten befindlichen Längenabschnitt des Längsschlitzes übernimmt. Dadurch kann unter anderem einer unerwünschten Verschmutzung empfindlicher Bereiche vorgebeugt werden. Es ist dabei zweckMäßig, die Länge des Kraftübertragungsteils entsprechend der Länge des Führungsschlittens auszubilden.

An dem Kraftübertragungsteil und an dem Führungsschlitten sind zum Zwecke der in der Gehäuse-Längsrichtung erwünschten Kraftübertragung zweckmäßigerweise quer zu der Gehäuse-Längsrichtung formschlüssig ineinandergreifende Zentriermittel vorgesehen. Diese bestehen insbesondere aus einem oder mehreren Paaren ineinandergreifender komplementärer Zentriervorsprünge und Zentriervertiefungen. Auf diese Weise erfolgt die Bewegungskopplung zwischen dem Kraftübertragungsteil und dem Führungsschlitten in vergleichbarer Weise wie zwischen dem Kraftübertragungsteil und dem Mitnehmer.

Zur Fixierung des Kraftübertragungsteils an dem Führungsschlitten kann beispielsweise eine Schraubverbindung vorgesehen sein. Durch diese Schraubverbindung kann bei Bedarf ein kraftschlüssiges Verspannen zwischen dem Kraftübertragungsteil und dem Führungsschlitten hervorgerufen werden, um die Übertragung der Stellkraft zu gewährleisten oder zu unterstützen.

Der Linearantrieb kann als elektrisch betätigbare Bauart ausgeführt sein und beispielsweise über einen Spindeltrieb verfügen, der ein als Spindelmutter ausgeführtes Antriebsteil linear zu verlagern im Stande ist. Besonders vorteilhaft ist jedoch eine Ausführungsform, bei der das Antriebsteil als Kolben ausgebildet ist und die Betätigungskraft durch Fluidbeaufschlagung erfolgt. In einem solchen Falle ist dem Längsschlitz eine bandartige Dichtungseinrichtung zugeordnet, die unkontrollierten Fluidaustritt durch den Längsschlitz hindurch verhindert.

Nachfolgend wird die Erfindung anhand der beiliegenden Zeichnung näher erläutert. In dieser zeigen:

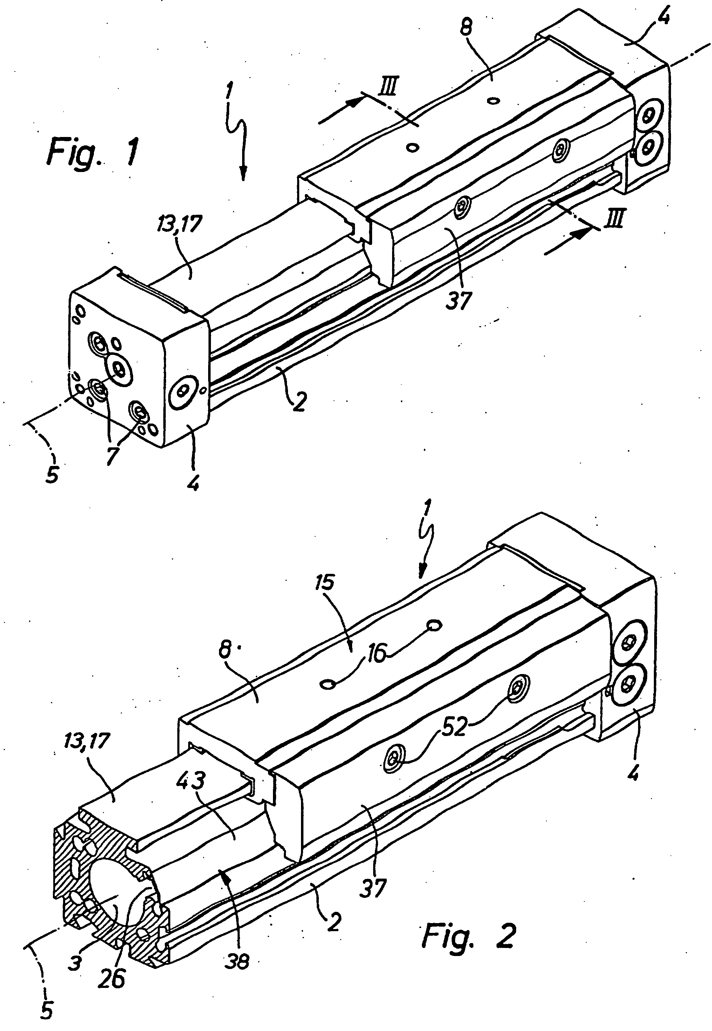

- Figur 1: eine bevorzugte erste Bauform des erfindungsgemäßen Linearantriebes in perspektivischer Darstellung,
- Figur 2: eine leicht vergrößerte Teildarstellung des Linearantriebes aus Figur 1, wobei das Gehäuse durchschnitten ist, um die Profilierung zu zeigen,
- Figur 3: einen Querschnitt durch den Linearantrieb gemäß Schnittlinie III-III im Bereich des Mitnehmers,

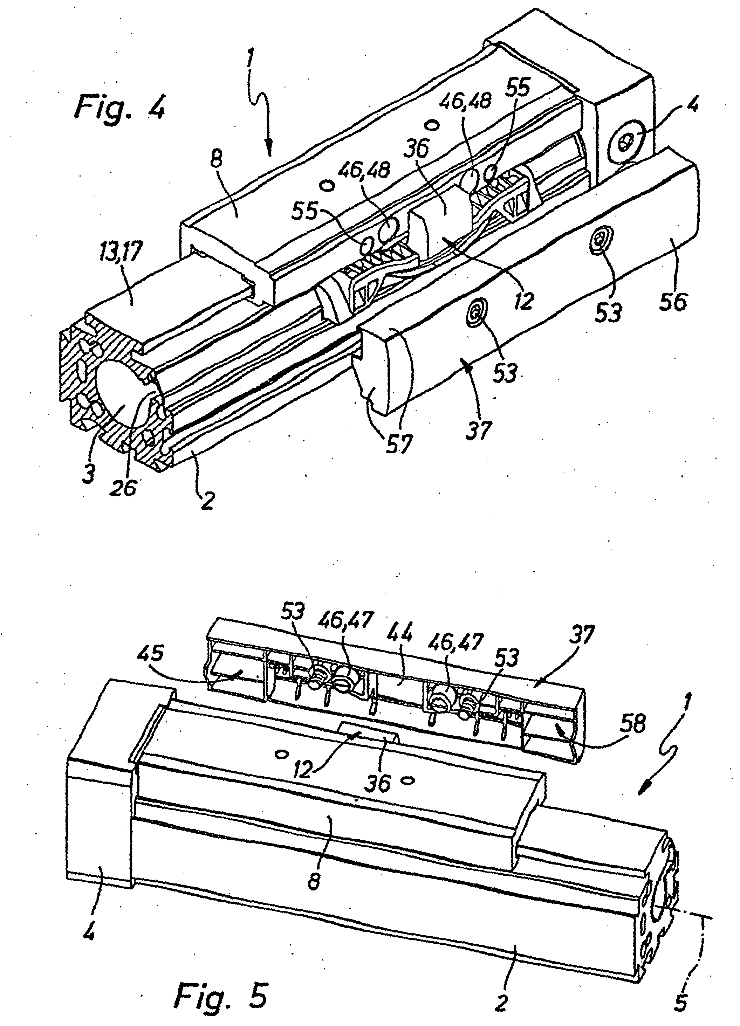

- Figur 4: eine der Figur 2 entsprechende Teildarstellung im abgenommenen Zustand des Kraftübertragungsteils,
- Figur 5: die Anordnung aus Figur 4 aus einer entgegengesetzten Blickrichtung, sodass der Blick auf die Innenseite des demontiert gezeigten kraftübertragungsteils freigegeben ist,

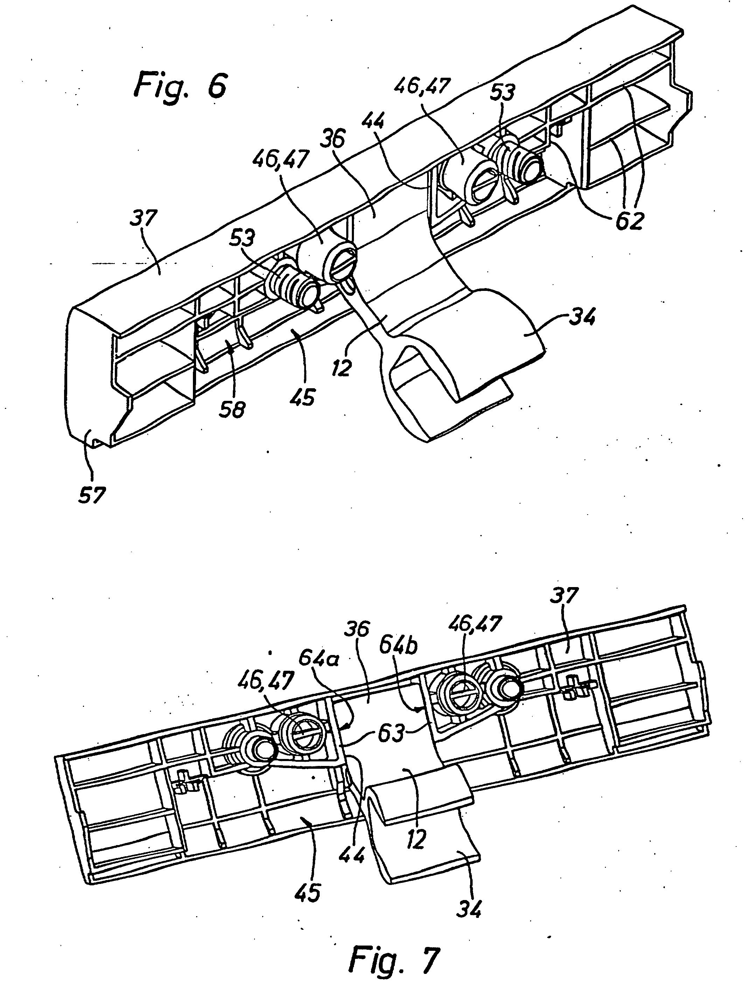

- Figur 6: eine Einzeldarstellung des Kraftübertragungsteils und des Mitnehmers im gekoppelten Zustand und
- Figur 7: die Anordnung aus Figur 6 aus einem anderen Blickwinkel.

Das Ausführungsbeispiel zeigt einen insgesamt mit Bezugsziffer 1 bezeichneten kolbenstangenlosen Linearantrieb in durch Fluidkraft betätigbarer Bauform. Er ist insbesondere für einen Betrieb mit Druckluft ausgelegt.

Der Linearantrieb 1 verfügt über ein längliches Gehäuse 2, das rohrförmig ausgebildet ist und im Innern einen vorzugsweise zylindrisch konturierten Aufnahmeraum 3 begrenzt, der stirnseitig beidseits durch am Gehäuse 2 befestigte Abschlussdeckel 4 verschlossen ist.

Im Innern des Aufnahmeraumes 3 befindet sich ein zu einer Bewegung in der strichpunktiert angedeuteten Gehäuse-Längsrichtung 5 antreibbares Antriebsteil 6, das als Kolben ausgebildet ist und den Aufnahmeraum 3 in zwei axial aufeinanderfolgende Arbeitskammern fluiddicht unterteilt. Über Anschlussöffnungen 7, die beim Ausführungsbeispiel gemeinsam an einem einzigen Abschlussdeckel 4 vorgesehen sind, kann eine Zufuhr und Abfuhr von Druckmedium bezüglich der Arbeitsräume erfolgen. Auf diese Weise lässt sich das Antriebsteil 6 zu einer Antriebsbewegung in der Gehäuse-Längsrichtung 5 veranlassen.

Die Antriebsbewegung des Antriebsteils 6 lässt sich außerhalb des Gehäuses 2 an einem Führungsschlitten 8 abgreifen, der mittels eines Mitnehmers 12 mit dem Antriebsteil 6 in der Gehäuse-Längsrichtung 5 bewegungsgekoppelt ist.

Der Führungsschlitten 8 ist an einer gehäusefesten Linearführung 13 in der Gehäuse-Längsrichtung 5 verstellbar geführt. Die Linearführung 13 ist hierzu parallel zum Gehäuse 2 ausgerichtet. Bevorzugt ist die Linearführung 13 an der Außenfläche des Gehäuses 2 angeordnet, wobei sie beim Ausführungsbeispiel über ihre gesamte Länge hinweg mit dem Gehäuse 2 verbunden ist. Sie ist zweckmäßigerweise von einer Führungsschiene 17 gebildet, die insbesondere schraubenlos an der Außenfläche des Gehäuses 2 fixiert ist. Das Ausführungsbeispiel zeigt eine Bauform, bei der die Führungsschiene 17, insbesondere durch Strangpressen, einstückig mit dem Gehäuse 2 ausgebildet ist.

Der Führungsschlitten 8 hat bevorzugt einen U-ähnlichen Querschnitt und übergreift die Linearführung 13 reiterartig. Dabei kooperiert er mit seinen beiden die Linearführung 13 auf entgegengesetzten Längsseiten flankierenden Schlittenschenkeln 11 mit jeweils einem an der zugeordneten Längsseite der Linearführung 13 vorgesehenen Führungsabschnitt 23. Letztere sind vorzugsweise von Führungsbahnen gebildet, die sich über die gesamte Länge der Linearführung 13 erstrecken. Die Schlittenschenkel 11 können zum führenden Zusammenwirken mit dem Führungsabschnitt 23 mit Wälz- oder Gleiteinrichtungen 10 ausgestattet sein.

Somit ist der Führungsschlitten 8 an der Linearführung 13 - ausgenommen in Gehäuse-Längsrichtung 5 - allseits abgestützt. An seiner von der Linearführung 13 abgewandten Oberseite verfügt er über eine Tragfläche 15, an der Befestigungsmittel 16 vorgesehen sind, sodass an der Tragfläche 15 eine zu transportierende Last fixierbar ist.

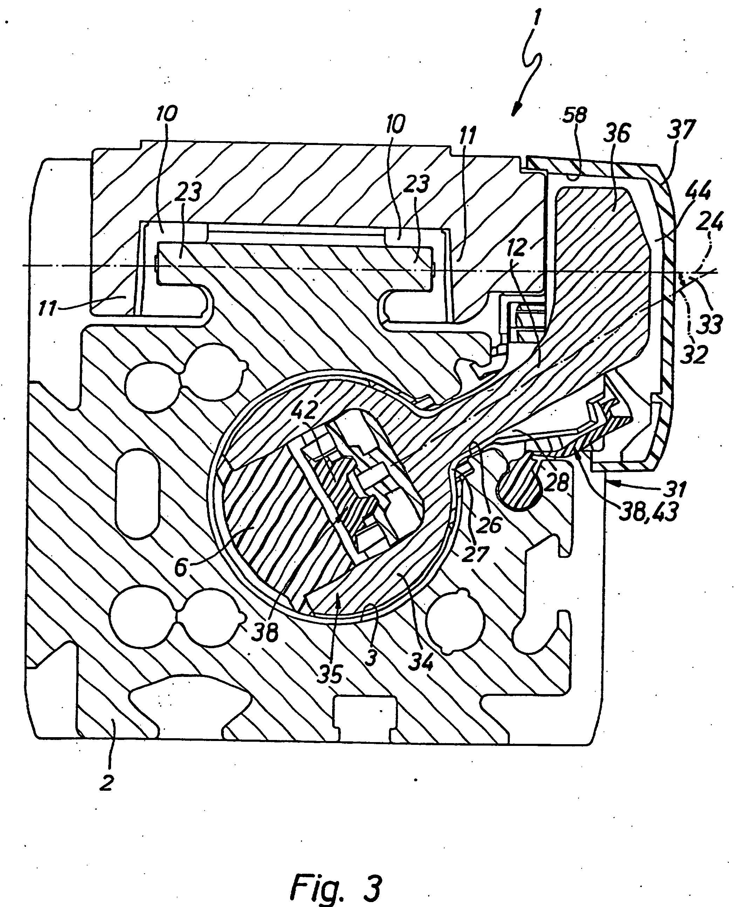

An einer Stelle des Umfanges des Aufnahmeraumes 3 ist die Wandung des Gehäuses 2 mit einem Längsschlitz 26 versehen. Dieser mündet mit einer inneren Schlitzöffnung 27 in den Aufnahmeraum 3 und mit einer entgegengesetzten äußeren Schlitzöffnung 28 zur längsseitigen Außenfläche 31 des Gehäuses 2 aus. Bevorzugt erstreckt sich der Längsschlitz 26 über die gesamte Länge des Gehäuses 2. Er verläuft in einer strichpunktiert angedeuteten Schlitzebene 32, die beim Ausführungsbeispiel bezüglich einer von den beiden Führungsabschnitten 23 der Linearführung 13 aufgespannten Führungsebene 24 geneigt verläuft, und zwar insbesondere unter einem in Figur 3 kenntlich gemachten spitzen Winkel 33. Die äußere Schlitzöffnung 28 ist der Führungsebene 24 zugewandt.

Durch den Längsschlitz 26 hindurch erstreckt sich der oben erwähnte Mitnehmer 12. Er ist mit einem nachfolgend als Befestigungsabschnitt 34 bezeichneten inneren Endabschnitt derart mit dem Antriebsteil 6 bewegungsgekoppelt, dass er mit diesem eine Antriebseinheit 35 bildet, die stets nur gemeinsam in der Gehäuse-Längsrichtung 5 bewegbar ist. Mit anderen Worten macht der Mitnehmer 12 die Linearbewegung des Antriebsteils 6 spielfrei mit.

Beim Ausführungsbeispiel ist der Befestigungsabschnitt 34 gabelartig ausgebildet und von der Seite her derart formschlüssig auf das Antriebsteil 6 aufgesteckt, dass in der Gehäuse-Längsrichtung 5 eine spielfreie, formschlüssige Verbindung vorliegt.

Über seinen außerhalb des Längsschlitzes 26 liegenden und als Kopplungsabschnitt 36 bezeichneten äußeren Endabschnitt ist der Mitnehmer 12 mittelbar, unter Zwischenschaltung eines Kraftübertragungsteils 37, mit dem Führungsschlitten 8 in der Gehäuse-Längsrichtung 5 ebenfalls spielfrei bewegungsgekoppelt. Auf diese Weise bilden das Antriebsteil 6, der Mitnehmer 12, das Kraftübertragungsteil 37 und der Führungsschlitten 8 eine stets nur gemeinsam linear verstellbare Bewegungseinheit.

Insbesondere wenn es sich bei dem Linearantrieb 1 um eine fluidbetätigte Bauart handelt, ist dem Längsschlitz 26 eine bandartige, biegeflexible Dichtungseinrichtung 38 zugeordnet, die in der Lage ist, den Längsschlitz 26 axial beidseits des Mitnehmers 12 zur Umgebung hin abzudichten, sodass die gewünschte Fluidbeaufschlagung möglich ist. Im Bereich des Mitnehmers 12 wird die Dichtungseinrichtung 38 vom Längsschlitz 26 abgehoben, um den Durchgriff des Mitnehmers 12 zu gestatten. Beim Ausführungsbeispiel enthält die Dichtungseinrichtung 38 ein für die erwähnte Abdichtung zuständiges inneres Dichtband 42, das im Bereich der inneren Schlitzöffnung 27 mit den Schlitzflanken des Längsschlitzes 26 zusammenarbeiten kann. Ergänzend ist beim Ausführungsbeispiel ferner ein äußeres Abdeckband 43 vorgesehen, das im Bereich der äußeren Schlitzöffnung 28 ein Eindringen von Verunreinigungen in den Längsschlitz 26 verhindert.

Der Linearantrieb 1 zeichnet sich durch eine besonders vorteilhafte Bewegungskopplung zwischen dem Mitnehmer 12 und dem Führungsschlitten 8 aus. Diese sieht vor, dass der Mitnehmer 12 mit seinem Kopplungsabschnitt 36 gemäß Figur 3 zwischen den Führungsschlitten 8 und das daran befestigte Kraftübertragungsteil 37 eingreift, wobei der Kopplungsabschnitt 36 - ohne direkt am Führungsschlitten 8 befestigt zu sein - im Rahmen einer Steckverbindung mit einer Kopplungsaufnahme 44 in Eingriff steht, die sich an der dem Führungsschlitten 8 zugewandten Innenseite 45 des Kraftübertragungsteils 37 befindet. Dabei ist die Steckverbindung so ausgeführt, dass in der Gehäuse-Längsrichtung ein Formschluss zwischen dem Kopplungsabschnitt 36 und der Kopplungsaufnahme 44 vorliegt, sodass sich in der Gehäuse-Längsrichtung 5 eine spielfreie Mitnahmeverbindung zwischen dem Mitnehmer 12 und dem Kraftübertragungsteil 37 ergibt.

Da das Kraftübertragungsteil 37 seinerseits in der Gehäuse-Längsrichtung spielfrei mit dem Führungsschlitten 8 bewegungsgekoppelt ist, ergibt sich somit die gewünschte spielfreie Mitnahmeverbindung zwischen den erwähnten Komponenten.

Die entsprechende stellkraftübertragende Verbindung zwischen dem Kraftübertragungsteil 37 und dem Führungsschlitten 8 geschieht durch an diesen beiden Bauteilen vorgesehene, quer zu der Gehäuse-Längsrichtung 5 formschlüssig ineinandergreifende Zentriermittel 46. Diese bestehen beim Ausführungsbeispiel aus zwei Paaren ineinandergreifender komplementärer Zentriervorsprünge 47 und Zentriervertiefungen 48. Bevorzugt sind die Zentriervorsprünge 47 zapfenartig und die Zentriervertiefungen 48 bohrungsartig ausgebildet.

Beim Ausführungsbeispiel sind zwei in der Gehäuse-Längsrichtung 5 mit Abstand zueinander angeordnete Paare solcher Zentriervorsprünge 47 und Zentriervertiefungen 48 vorgesehen, wobei die Kopplungsaufnahme 44 und der Kopplungsabschnitt 36 zweckmäßigerweise dazwischen angeordnet sind. Beim Ausführungsbeispiel befinden sich die Zentriervorsprünge 47 am Kraftübertragungsteil 37 und ragen in Richtung zum Führungsschlitten 8, zu den dort gegenüberliegend angeordneten Zentriervertiefungen 48. Diese Anordnung könnte aber auch umgekehrt sein.

Bei der Montage des Kraftübertragungsteils 37 wird gleichzeitig sowohl die Steckverbindung zwischen dem Kopplungsabschnitt 36 und der Kopplungsaufnahme 44 als auch zwischen den Zentriermitteln 46 hergestellt. Das Kraftübertragungsteil 37 wird dabei quer zur Gehäuse-Längsrichtung 5 an den Führungsschlitten 8 angesetzt. Der Anbringungsort für das Kraftübertragungsteil 37 befindet sich zweckmäßigerweise seitlich am Führungsschlitten 8, und zwar vorzugsweise im Bereich des Treffpunktes zwischen der Führungsebene 24 und der Schlitzebene 32.

Das Kraftübertragungsteil 37 liegt insbesondere auf gleicher Höhe wie die Führungsebene 24.

Die Zentriermittel 46 bilden Passverbindungen, die beim Ausführungsbeispiel, mit Ausnahme der Richtung des Zusammenstekkens, eine spielfreie Verbindung hervorrufen.

Um das Kraftübertragungsteil 37 am Führungsschlitten 8 zu fixieren, ist es beim Ausführungsbeispiel zusätzlich mit dem Führungsschlitten 8 verschraubt. Beim Ausführungsbeispiel sind zwei Schraubverbindungen 52 vorgesehen, die in der Steckrichtung des Kraftübertragungsteils 37, quer zur Gehäuse-Längsrichtung 5, wirksam sind und jeweils eine sich am Kraftübertragungsteil 37 abstützende Befestigungsschraube 53 enthalten, die in ein komplementäres Gewindeloch 55 des Führungsschlittens 8, insbesondere lösbar, einschraubbar sind.

Durch die Schraubverbindungen 52 wird das Kraftübertragungsteil 37 mit seiner Innenseite voraus mit der Seitenfläche des Führungsschlittens 8 verspannt.

Bei dem Kraftübertragungsteil 37 handelt es sich zweckmäßigerweise um ein einstückiges Kunststoff-Formteil. Es kann durch Spritzgießen hergestellt werden. Bevorzugt ist es gehäuseartig ausgebildet, wobei es einen Hohlkörper darstellt, der an der Innenseite 45 offen und im Übrigen geschlossen ist. Es verfügt daher über eine der Innenseite 45 gegenüberliegende Außenwand 56 und eine umlaufende Seitenwand 57.

In dem von der Außenwand 56 und der Seitenwand 57 begrenzten Innenraum 58 des Kraftübertragungsteils 37 befinden sich rippenartige Verstrebungen 62, die der Gehäusestruktur die erförderliche Festigkeit verleihen.

Das Kraftübertragungsteil 37 erstreckt sich zweckmäßigerweise über die gesamte Länge des Führungsschlittens 8. Es bildet beim Ausführungsbeispiel gleichzeitig eine Abdeckung für den außerhalb des Längsschlitzes 26 liegenden Abschnitt des Mitnehmers 12 und den jeweils auf gleicher axialer Höhe mit dem Führungsschlitten 8 liegenden Längenabschnitt des Längsschlitzes 26. Die Abdeckfunktion ist auch aus Figur 3 gut zu erkennen. Es kann dadurch verhindert werden, dass im Bereich des Mitnehmers 12 bei abgehobenem äußerem Abdeckband 43 Verunreinigungen in den Längsschlitz 26 eintreten.

Die Kopplungsaufnahme 44 befindet sich im Innenraum 58 des nach Art eines Deckels mit der offenen Seite voraus an eine Seitenfläche des Führungsschlittens 8 angesetzten Kraftübertragungsteils 37. Da die Höhe des Kraftübertragungsteils 37 so groß gewählt ist, dass es gleichzeitig auch den benachbarten Längenabschnitt des Längsschlitzes 26 überdeckt, ist der Mitnehmer 12 gleichwohl in der Lage, ungehindert in den Innenraum 58 zur Paarung mit der dort vorgesehenen Kopplungsaufnahme 44 hineinzuragen.

Beim Ausführungsbeispiel ist die Kopplungsaufnahme 44 von einer an der Innenseite 45 des Kraftübertragungsteils 37 ausgebildeten Vertiefung gebildet. Den Grund der Vertiefung bildet die Außenwand 56. An den in Gehäuse-Längsrichtung 5 weisenden Seiten ist die Vertiefung von rippenartigen Vorsprüngen 63 begrenzt, die sich quer zur Gehäuse-Längsrichtung 5 erstrekken und an der Innenfläche der Außenwand 56 und der Seitenwand 57 integral angeformt sind.

Die einander in der Gehäuse-Längsrichtung 5 zugewandten Flächen der Vorsprünge 63 bilden seitliche Begrenzungsflächen 64a, 64b der Kopplungsaufnahme 44, zwischen die der Mitnehmer 12 mit seinem Kopplungsabschnitt 36 formschlüssig eintaucht.

Die in der Gehäuse-Längsrichtung 5 gemessenen Breitenabmessungen des Kopplungsabschnittes 36 und der Kopplungsaufnahme 44 können so aufeinander abgestimmt sein, dass der Kopplungsabschnitt 36 mit leichter Vorspannung fixiert ist. Insbesondere kann der Kopplungsabschnitt 36 im Rahmen der Steckverbindung in die Kopplungsaufnahme 44 eingepresst sein.

Es besteht allerdings die zweckmäßige Möglichkeit, die Steckverbindung so auszuführen, dass der Kopplungsabschnitt 36 in einer zur Gehäuse-Längsrichtung rechtwinkeligen Querebene relativ zum Kraftübertragungsteil 37 und somit auch zum Führungsschlitten 8 zumindest begrenzt beweglich ist. Diese Querebene verläuft rechtwinkelig zur Gehäuse-Längsrichtung 5. Es kann damit ein selbsttätiger Toleranzausgleich ermöglicht werden, wenn sich die oben erwähnte Bewegungseinheit längs des Gehäuses 2 bewegt und die Bewegungsbahnen des Antriebsteils 6 und des Führungsschlittens 8 toleranzbedingt nicht exakt parallel verlaufen.

Die im zusammengesteckten Zustand zwischen dem Kopplungsabschnitt 36 und der Kopplungsaufnahme 44 eingenommene Relativposition ist innerhalb der zur Gehäuse-Längsrichtung 5 rechtwinkelig verlaufenden Querebene variabel. Es sind insbesondere unterschiedliche Einsteck- bzw. Aufstecktiefen möglich. Dadurch ist gewährleistet, dass die gewünschte formschlüssige Steckverbindung unabhängig von der im Moment des Aufsetzens des Kraftübertragungsteils 37 vorliegenden Relativposition zwischen dem Mitnehmer 12 und dem Führungsschlitten 8 herstellbar ist. Es erfolgt also bei der Steckmontage, die aufgrund der Zentriermittel 46 eine feste Zuordnung zwischen dem Kraftübertragungsteil 37 und dem Führungsschlitten 8 hervorruft, ein selbsttätiger Toleranzausgleich in Bezug auf die Relativposition zwischen dem Mitnehmer 12 und dem Kraftübertragungsteil 37. Die Montage ist daher sehr einfach, und an die Herstellungstoleranzen sind insgesamt geringere Anforderungen gestellt, was die Fertigungs- und Montagekosten verringert.

## Patentansprüche

1. Kolbenstangenloser Linearantrieb, mit einem länglichen Gehäuse (2), das einen Aufnahmeraum (3) für ein in der Gehäuse-Längsrichtung (5) bewegliches Antriebsteil (6) aufweist, das über einen einen Längsschlitz (26) des Gehäuses (2) durchsetzenden Mitnehmer (12) mit einem Führungsschlitten (8) bewegungsgekoppelt ist, der an einer gehäusefesten Linearführung (13) in der Gehäuse-Längsrichtung (5) verstellbar geführt ist, **dadurch gekennzeichnet, dass** der Mitnehmer (12) mit einem von seinem äußeren Endabschnitt gebildeten Kopplungsabschnitt (36) zwischen den Führungsschlitten (8) und ein an diesem befestigtes Kraftübertragungsteil (37) eingreift, wobei er ohne direkte führungsschlittenseitige Befestigung im Rahmen einer Steckverbindung in der Gehäuse-Längsrichtung (5) formschlüssig mit einer an der dem Führungsschlitten (8) zugewandten Innenseite (45) des Kraftübertragungsteils (37) ausgebildeten Kopplungsaufnahme (44) in Eingriff steht.

2. Linearantrieb nach Anspruch 1, **dadurch gekennzeichnet, dass** der Kopplungsabschnitt (36) derart formschlüssig an der Kopplungsaufnahme (44) fixiert ist, dass er in einer zur Gehäuse-Längsrichtung (5) rechtwinkeligen Querebene relativ zum Kraftübertragungsteil (37) und zum Führungsschlitten (8) zumindest begrenzt beweglich ist.

3. Linearantrieb nach Anspruch 1 oder 2, **dadurch gekennzeichnet, dass** die Kopplungsaufnahme (44) zwei in der Gehäuse-Längsrichtung (5) orientierte, einander zugewandte seitliche Begrenzungsflächen (64a, 64b) aufweist, zwischen die der Mitnehmer (12) mit seinem Kopplungsabschnitt (36) formschlüssig eintaucht.

4. Linearantrieb nach einem der Ansprüche 1 bis 3, **dadurch gekennzeichnet, dass** die Kopplungsaufnahme (44) von einer im Bereich der Innenseite (45) des Kraftübertragungsteils (37) ausgebildeten Vertiefung gebildet ist.

5. Linearantrieb nach Anspruch 4, **dadurch gekennzeichnet, dass** die Kopplungsaufnahme (44) seitlich von rippenartigen Vorsprüngen (63) des Kraftübertragungsteils (37) begrenzt ist.

6. Linearantrieb nach einem der Ansprüche 1 bis 5, **dadurch gekennzeichnet, dass** das Kraftübertragungsteil (37) ein einsstückiges Kunststoff-Formteil ist.

7. Linearantrieb nach einem der Ansprüche 1 bis 6, **dadurch gekennzeichnet, dass** das Kraftübertragungsteil (37) gehäuseartig ausgebildet ist und einen zur Innenseite (45) offenen Innenraum (58) aufweist, in dem sich die Kopplungsaufnahme (44) befindet.

8. Linearantrieb nach einem der Ansprüche 1 bis 7, **dadurch gekennzeichnet, dass** das Kraftübertragungsteil (37) seitlich am Führungsschlitten (8) angeordnet ist.

9. Linearantrieb nach einem der Ansprüche 1 bis 8, **dadurch gekennzeichnet, dass** sich das Kraftübertragungsteil (37) über die gesamte Länge des Führungsschlittens (8) erstreckt.

10. Linearantrieb nach einem der Ansprüche 1 bis 9, **dadurch gekennzeichnet, dass** das Kraftübertragungsteil (37) eine Abdeckung für den außerhalb des Längsschlitzes (26) liegenden Abschnitt des Mitnehmers (12) und den jeweils auf gleicher axialer Höhe mit dem Führungsschlitten (8) liegenden Längenabschnitt des Längsschlitzes (26) bildet.

11. Linearantrieb nach einem der Ansprüche 1 bis 10, **dadurch gekennzeichnet, dass** an dem Kraftübertragungsteil (37) und an dem Führungsschlitten (8) zum Zwecke einer in der Gehäuse-Längsrichtung (5) erfolgenden Kraftübertragung quer zu der Gehäuse-Längsrichtung (5) formschlüssig ineinandergreifende Zentriermittel (46) vorgesehen sind.

12. Linearantrieb nach Anspruch 11, **dadurch gekennzeichnet, dass** die Zentriermittel (46) mindestens ein Paar ineinandergreifender komplementärer Zentriervorsprünge (47) und Zentriervertiefungen (48) aufweisen.

13. Linearantrieb nach einem der Ansprüche 1 bis 12, **dadurch gekennzeichnet, dass** das Kraftübertragungsteil (37) durch quer zur Gehäuse-Längsrichtung (5) verlaufende Schraubverbindungen (52) mit dem Führungsschlitten (8) verschraubt ist.

14. Linearantrieb nach einem der Ansprüche 1 bis 13, **dadurch gekennzeichnet, dass** die Linearführung (13) an ihren beiden einander entgegengesetzten Längsseiten über mit dem Führungsschlitten (8) kooperierende Führungsabschnitte (23) verfügt, die eine Führungsebene (24) aufspannen, bezüglich der die den Längsschlitz (26) enthaltende Schlitzebene (32) unter einem spitzen Winkel (33) schräg verläuft, wobei das Kraftübertragungsteil (37) auf Höhe der Führungsebene (24) seitlich am Führungsschlitten (8) montiert ist.

15. Linearantrieb nach einem der Ansprüche 1 bis 14, **gekennzeichnet durch** eine **durch** Fluidkraft betätigbare Bauform, bei der das Antriebsteil (6) ein fluidisch beaufschlagbarer Kolben ist und bei der dem Längsschlitz (26) eine bandartige Dichtungseinrichtung (38) zugeordnet ist.

## Claims

1. Rodless linear drive with an elongated housing (2) with a mounting space (3) for a drive section (6) which is movable in the housing longitudinal direction (5) and is movement-coupled via a driver (12) passing through a longitudinal slot (26) of the housing (2) to a guide carriage (8), which is guided adjustably in the housing longitudinal direction (5) on a linear guide (13) fixed to the housing, **characterised in that** the driver (12) engages with a coupling section (36) formed by its outer end section between the guide carriage (8) and a force transmission element (37) fastened to the former wherein, without direct fastening on the guide carriage side, it makes positive engagement in the housing longitudinal direction (5), in the context of a plug-in connection, with a coupling receptacle (44) formed on the inner side (45) of the force transmission element (37) facing the guide carriage (8).

2. Linear drive according to claim 1, **characterised in that** the coupling section (36) is fixed positively to the coupling receptacle (44) in such a way that it has at least limited movement capability in a transverse plane at right-angles to the housing longitudinal direction (5), relative to the force transmission element (37) and the guide carriage (8).

3. Linear drive according to claim 1 or 2, **characterised in that** the coupling receptacle (44) has two side boundary faces (64a, 64b) facing one another and oriented in the housing longitudinal direction (5), between which the driver (12) dips with its coupling section (36).

4. Linear drive according to any of claims 1 to 3, **characterised in that** the coupling receptacle (44) is formed by a recess made in the area of the inner side (45) of the force transmission element (37).

5. Linear drive according to claim 4, **characterised in that** the coupling receptacle (44) is bounded at the side by rib-like projections (63) of the force transmission element (37).

6. Linear drive according to any of claims 1 to 5, **characterised in that** the force transmission element (37) is a one-piece plastic moulding.

7. Linear drive according to any of claims 1 to 6, **characterised in that** the force transmission element (37) is like a housing in form and has an internal space (58) open to the inner side (45), in which the coupling receptacle (44) is located.

8. Linear drive according to any of claims 1 to 7, **characterised in that** the force transmission element (37) is mounted on the side of the guide carriage (8).

9. Linear drive according to any of claims 1 to 8, **characterised in that** the force transmission element (37) extends over the whole length of the guide carriage (8).

10. Linear drive according to any of claims 1 to 9, **characterised in that** the force transmission element (37) forms a cover for the section of the driver (12) lying outside the longitudinal slot (26), and for the length section of the longitudinal slot (26) lying at the same axial height as the guide carriage (8):

11. Linear drive according to any of claims 1 to 10, **characterised in that** centring means (46) engaging positively in one another at right-angles to the housing longitudinal direction (5) are provided on the force transmission element (37) and on the guide carriage (8) for the purpose of a transfer of force effected in the housing longitudinal direction (5).

12. Linear drive according to claim 11, **characterised in that** the centring means (46) have at least one pair of complementary centring projections (47) and centring recesses (48) which engage in one another.

13. Linear drive according to any of claims 1 to 12, **characterised in that** the force transmission element (37) is bolted to the guide carriage (8) by bolted connections (52) running at right-angles to the housing longitudinal direction (5).

14. Linear drive according to any of claims 1 to 13, **characterised in that** the linear guide (13) has guide sections (23) cooperating with the guide carriage (8) on its two opposing side walls and spanning a guide plane (24) with reference to which the slot plane (32) containing the longitudinal slot (26) runs at an acute angle (33), while the force transmission element (37) is mounted on the side of the guide carriage (8) at the height of the guide plane (24).

15. Linear drive according to any of claims 1 to 14, **characterised by** a design which may be actuated by fluid power, in which the drive section (6) is a piston capable of fluidic pressurisation, and in which the longitudinal slot (26) is assigned a band-like sealing device (38).

## Revendications

1. Entraînement linéaire sans tige de piston, comportant un carter (2) allongé, qui comporte une enceinte de réception (3) pour un élément d'entraînement (6), qui est mobile dans le sens longitudinal (5) du carter et qui est couplé en mouvement, par l'intermédiaire d'un taquet d'entraînement (12) passant à travers une fente longitudinale (26) du carter (2), avec un chariot de guidage (8), qui est monté mobile dans le sens longitudinal du carter (5) contre un guidage linéaire (13) solidaire du carter, **caractérisé en ce que** le taquet d'entraînement (12), avec un tronçon de couplage (36), formé par sa zone d'extrémité extérieure, entre en prise entre le chariot de guidage (8) et un élément de transmission de force (37) fixé contre ce dernier, ledit taquet d'entraînement, sans fixation directe du côté du chariot de guidage, étant en prise par emboîtement dans le sens longitudinal du carter (5) selon un assemblage enfiché avec un logement de couplage (44) réalisé sur la face intérieure (45), orientée vers le chariot de guidage (8), de l'élément de transmission de force (37).

2. Entraînement linéaire selon la revendication 1, **caractérisé en ce que** le tronçon de couplage (36) est fixé par complémentarité de formes au niveau du logement de couplage (44), de telle sorte qu'il est mobile au moins de manière limitée par rapport à l'élément de transmission de force (37) et au chariot de guidage (8) dans un plan transversal perpendiculaire au sens longitudinal du carter (5).

3. Entraînement linéaire selon la revendication 1 ou 2, **caractérisé en ce que** le logement de couplage (44) comporte deux surfaces de délimitation latérales (64a, 64b) orientées dans le sens longitudinal du carter (5), tournées l'une vers l'autre, entre lesquelles s'engage le taquet d'entraînement (12) avec son tronçon de couplage (36).

4. Entraînement linéaire selon l'une des revendications 1 à 3, **caractérisé en ce que** le logement de couplage (44) est formé par une cavité ménagée dans la zone de la face intérieure (45) de l'élément de transmission de force (37).

5. Entraînement linéaire selon la revendication 4, **caractérisé en ce que** le logement de couplage (44) est délimité latéralement par des saillies (63) en forme de nervures sur l'élément de transmission de force (37).

6. Entraînement linéaire selon l'une des revendications 1 à 5, **caractérisé en ce que** l'élément de transmission de force (37) est une pièce moulée d'un seul tenant en matière plastique.

7. Entraînement linéaire selon l'une des revendications 1 à 6, **caractérisé en ce que** l'élément de transmission de force (37) est conçu sous forme de boîtier et comporte un compartiment intérieur (58), qui est ouvert vers la face intérieure (45) et dans lequel est ménagé le logement de couplage (44).

8. Entraînement linéaire selon l'une des revendications 1 à 7, **caractérisé en ce que** l'élément de transmission de force (37) est agencé sur un côté du chariot de guidage (8).

9. Entraînement linéaire selon l'une des revendications 1 à 8, **caractérisé en ce que** l'élément de transmission de force (37) s'étend sur toute la longueur du chariot de guidage (8).

10. Entraînement linéaire selon l'une des revendications 1 à 9, **caractérisé en ce que** l'élément de transmission de force (37) forme un couvercle pour la partie du taquet d'entraînement (12) située en dehors de la fente longitudinale (26) et pour la partie longitudinale de la fente longitudinale (26) située à la même hauteur axiale que le chariot de guidage (8).

11. Entraînement linéaire selon l'une des revendications 1 à 10, **caractérisé en ce que**, contre l'élément de transmission de force (37) et contre le chariot de guidage (8), sont prévus des moyens de centrage (46) qui entrent en prise par emboîtement transversalement au sens longitudinal du carter (5) en vue d'une transmission des forces dans le sens longitudinal du carter (5).

12. Entraînement linéaire selon la revendication 1 1, **caractérisé en ce que** les moyens de centrage (46) comportent au moins une paire de saillies de centrage (47) et de cavités de centrage (48) entrant en prise par complémentarité les unes dans les autres.

13. Entraînement linéaire selon l'une des revendications 1 à 12, **caractérisé en ce que** l'élément de transmission de force (37) est vissé avec le chariot de guidage (8) par l'intermédiaire d'assemblages vissés (52) s'étendant transversalement au sens longitudinal du carter (5).

14. Entraînement linéaire selon l'une des revendications 1 à 13, **caractérisé en ce que** le guidage linéaire (13), sur ses deux côtés longitudinaux face à face, comporte des tronçons de guidage (23), qui coopèrent avec le chariot de guidage (8) et qui déploient un plan de guidage (24) incliné selon un angle aigu (33) par rapport au plan (32) contenant la fente longitudinale (26), l'élément de transmission de force (37) étant monté à hauteur du plan de guidage (24) sur un côté du chariot de guidage (8).

15. Entraînement linéaire selon l'une des revendications 1 à 14, **caractérisé par** une forme de construction destinée à être actionnée par la force d'un fluide, dans laquelle l'élément d'entraînement (6) est un piston à solliciter par un fluide et dans laquelle une garniture d'étanchéité (38) en forme de bande est associée à la fente longitudinale (26).
